# EUROPEAN PATENT APPLICATION

(11) **EP 4 664 545 A1**
(43) Date of publication of application: **17.12.2025**
(21) Application number: 24771209.4
(22) Date of filing: 14.03.2024
(51) Int. Cl.: H01M 4/133, H01M 4/66, H01M 4/62, H01M 4/02

(54) **NEGATIVE ELECTRODE FOR LITHIUM METAL BATTERY**

(30) Priority: 14.03.2023 KR 20230033401
(71) Applicant: SK On Co., Ltd., Seoul 03161 (KR)
(72) Inventor: CHOI, Bit-Na, Daejeon 34124 (KR); LEE, Jae-Woo, Daejeon 34124 (KR)
(74) Representative: Prüfer & Partner mbB Patentanwälte · Rechtsanwälte
(86) International application number: PCT/KR2024/003262
(87) International publication number: WO 2024/191210

(57) **Abstract**

The present disclosure relates to a negative electrode for a lithium metal battery, the negative electrode comprising a substrate and a porous layer on the substrate, wherein the porous layer contains metal powder and has a porosity of at least 30% determined by XRM analysis in a completely discharged state or prior to the electrodeposition of lithium metal.

## Description

### Technical Field

The present disclosure relates to a negative electrode for a lithium metal battery.

### Background Art

Lithium is not only the lightest metal, but also possesses a low reduction potential (-3.04 V vs. SHE) and a high theoretical capacity (3860 mAh/g), and therefore, lithium metal batteries using lithium metal itself as the negative electrode active material are being developed.

Lithium secondary batteries using lithium metal as the electrode require thin lithium metal electrodes to maximize battery efficiency and energy density. However, lithium foils of the related art are manufactured using physical rolling methods, but such rolling methods have limitations in producing lithium foils with a thickness below a certain level.

Recently, research into anode-free batteries has also been actively underway. Anode-free batteries utilize a negative electrode that does not contain the lithium metal negative electrode active material (layer). During charging, lithium ions are reduced, leading to the electrodeposition of lithium on the surface of the negative electrode current collector, thereby forming a lithium metal plating film.

However, the lithium layer formed on the negative electrode current collector has a low electrodeposition density, leading to severe side reactions with the electrolyte, which rapidly degrades battery lifespan. Furthermore, the negative electrode of an anode-free battery presents numerous problems that need to be solved in terms of battery performance and stability, such as problems of uneven lithium electrodeposition and dendrite growth during charging, and significant electrode volume changes during charging and discharging.

Meanwhile, various methods are being attempted to increase the uniformity of lithium electrodeposition and thus increase electrodeposition efficiency, and to suppress the growth of dendrites, such as coating the surface of the negative electrode current collector of the above-mentioned plate-like body with a lithiophilic metal having an affinity for lithium, such as silver (Ag), a carbon material such as carbon black or the like, or a mixture of a lithiophilic metal such as silver as above and a carbon material, or using a three-dimensional structure, or the like.

However, the coating layer formed thereby suffers from limitations such as high resistance or low charge/discharge efficiency, and is evaluated to have low economic feasibility and practical applicability.

### Disclosure of Invention

### Technical Problem

An aspect of the present disclosure is to provide a negative electrode for a lithium metal battery in which the growth of lithium dendrites may be suppressed by inducing uniform lithium deposition.

In addition, an aspect of the present disclosure is to provide a negative electrode in which battery stability may be enhanced by suppressing electrode volume changes during charging and discharging.

In addition, an aspect of the present disclosure is to improve electrochemical characteristics of a lithium metal battery by using the negative electrode described above.

### Solution to Problem

According to an aspect of the present disclosure, a negative electrode for a lithium metal battery is provided, and the negative electrode includes a substrate and a porous layer on the substrate, wherein the porous layer has a porosity of 30% or more determined by XRM analysis before lithium metal electrodeposition or upon complete discharge.

The porous layer may have a porosity of 30% or more and 95% or less determined by XRM analysis before the lithium metal electrodeposition or upon the complete discharge.

The porous layer may have a closed porosity of 0.05% or less determined by XRM analysis before the lithium metal electrodeposition or upon the complete discharge.

The porous layer may have a thickness of 0.5 to 100 µm.

The metal powder may include at least one metal selected from the group consisting of Si, Zn, Ti, Au, Ag, Pt, Mg, Sn, In, Bi, Cu, Ge, Al, Pb, Sb, Ni, Mn, Fe, Co, Cr, W and Ru, an oxide of the metal, or an alloy of the metal.

The porous layer may further include at least one type of carbon material selected from the group consisting of graphitic carbon nitride, phosphorus-doped graphitic carbon nitride, and boron-doped graphitic carbon nitride.

The porous layer may further include at least one conductive polymer selected from the group consisting of poly(3,4-ethylenedioxythiophene):poly(styrenesulfonate) (PEDOT:PSS), polyaniline (PANI), polypyrrole (PPy), polythiophene (PT), polyacetylene (PA), and polyp-phenylene vinylene (PPV).

The porous layer may further include a binder.

The binder may be a fluorine-containing binder.

The binder may include at least one selected from the group consisting of polyvinylidene fluoride (PVdF), polytetrafluoroethylene (PTFE), polytetrafluoroethylene, and fluororubber.

The metal powder may be a particle having an aspect ratio greater than 1.

The metal powder may have a major axis length of 1 to 100 µm.

The metal powder may be a rod-shaped particle.

The metal powder may be a rod-shaped particle having at least one inflection point where a direction of extension changes from one end to the other end.

A bending angle β, which changes in the direction of extension at the inflection point, may be 5° or more and 90° or less.

The metal powder may have two or more branches.

The metal powder may have a main branch and at least one side branch connected to the main branch.

The porous layer may include a first layer on a substrate surface side and a second layer that is an outer surface side of the porous layer, and
a metal powder in the first layer may have a smaller particle size than a metal powder in the second layer.

Lithium metal may be electrodeposited within pores of the porous layer.

The substrate may be a current collector.

### Advantageous Effects of Invention

According to an aspect of the present disclosure, a negative electrode for a lithium metal battery may store lithium metal within the pores of a porous layer formed on the surface of a substrate, thereby enhancing electrochemical characteristics by increasing a contact surface area between the lithium metal and a current collector.

In addition, a negative electrode for a lithium metal battery according to the present disclosure has a high specific surface area, which may reduce a local current density of the negative electrode, thereby providing a uniform electron distribution within the negative electrode.

In addition, a negative electrode for a lithium metal battery according to the present disclosure may prevent lithium dendrite formation and growth during charging and discharging, thereby improving battery stability.

Furthermore, a negative electrode for a lithium metal battery according to the present disclosure may provide sufficient space for lithium deposition during charging and discharging, thereby suppressing volumetric expansion of the battery.

### Brief Description of Drawings

FIG. 1 is a diagram conceptually illustrating cross-sections of an anode-free battery in charging and discharging states, wherein (a) illustrates a cross-section of a negative electrode in a discharged state, and (b) illustrates a cross-section of a negative electrode in a charged state.
FIG. 2 is a schematic diagram illustrating examples of rod-shaped metal powder particles according to the present disclosure.
FIG. 3 is a schematic diagram illustrating an example of a rod-shaped metal powder particle having at least one inflection point.
FIG. 4 is a schematic diagram illustrating an example of a metal powder particle having two or more branches.
FIG. 5 is a diagram illustrating a cross-section of a metal powder particle having a through-hole by way of example.
FIG. 6 is a schematic diagram illustrating cross-sections of a negative electrode in discharged and charged states, with a porous layer formed by metal powder on the surface of a negative electrode current collector, wherein (a) illustrates a negative electrode in a discharged state, and (b) illustrates a negative electrode in a charged state.
FIG. 7 provides respective images of metal powder particles used in the negative electrodes of Examples 1 to 4.
FIG. 8 is an image of a cross-section of the negative electrode in a charged state of Example 1 and an image of an enlarged portion thereof.
FIG. 9 is an image showing the internal pore structure of the porous layer of the negative electrode in a discharged state of Example 1.
FIG. 10 is an image of a cross-section of the negative electrode in a charged state of Example 1 and an image of an enlarged portion thereof.
FIG. 11 provides images of cross-sections of the negative electrodes in a charged state of Comparative Examples 1 and 2, wherein (a) is the negative electrode of Comparative Example 1 and (b) is the negative electrode of Comparative Example 2.
FIG. 12 is a graph showing the change in specific capacity with respect to the number of cycles for batteries using the negative electrodes of Example 1, Comparative Examples 1, and Comparative Example 3.
FIG. 13 is a graph showing the change in specific capacity with respect to the number of cycles for batteries using the negative electrodes of Examples 2 to 4.

### Best Mode for the Invention

The present disclosure relates to a negative electrode for a lithium metal battery, and in more detail, provides a negative electrode including a porous layer of metal powder on the surface of a substrate.

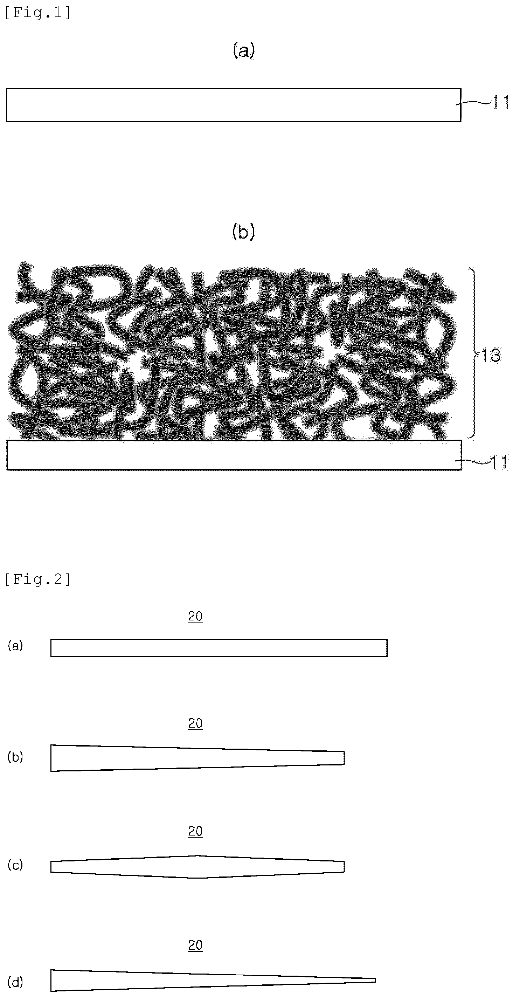

In this specification, a lithium metal battery refers to a battery using lithium metal as the negative electrode active material. Thereamong, a battery that does not preemptively incorporate lithium metal into the negative electrode current collector is referred to as an anode-free battery. The cross-section of the negative electrode of such an anode-free battery and the cross-section of the negative electrode during charging are schematically illustrated in FIG. 1. (a) of FIG. 1 illustrates a cross-section of a negative electrode (10) of the anode-free battery, and (b) illustrates a cross-section of the charged negative electrode (10'). As illustrated in (a) of FIG. 1, a plate-like body of a conductive metal such as copper or the like is used as the substrate, for example, a negative electrode current collector (11). During the charging process, lithium metal is electrodeposited on the negative electrode current collector (11), forming a lithium layer (13), as illustrated in (b) of FIG. 1. The negative electrode of such an anode-free battery suffers from uneven electron density due to uneven deposition of a lithium layer on the negative electrode current collector, which may lead to the formation of lithium dendrites.

The present disclosure provides a negative electrode for a lithium metal negative electrode battery, and in detail, provides a negative electrode applicable to an anode-free battery. According to an embodiment of the present disclosure, the negative electrode for a lithium metal negative electrode battery includes a substrate and a porous layer on the substrate, and the porous layer may have a porosity of 30% or more as determined by XRM analysis before lithium metal electrodeposition or upon complete discharge. Hereinafter, the porous layer is also referred to as a porous storage layer or a porous coating layer.

Hereinafter, the negative electrode of the present disclosure will be described in more detail.

The negative electrode in an embodiment of the present disclosure includes a substrate and a high-surface-area porous layer on the substrate. The porous layer may be formed directly on the substrate, or another layer may be further included between the porous layer and the substrate.

The substrate may function as a current collector, in detail, a negative electrode current collector, and may be suitably used as the substrate if it may be commonly used as a negative electrode current collector. For example, the substrate may be used without particular limitation as long as it is conductive and does not cause chemical change during operation of the battery, and may be a metal such as copper, stainless steel, aluminum, nickel, titanium or the like, or an alloy containing at least one of the above metals, such as an aluminum-cadmium alloy or the like, calcined carbon, or the like. A substrate having a surface treated with carbon, nickel, titanium, silver, or the like on the surface of a metal such as copper, stainless steel or the like may be used as the negative electrode current collector. Furthermore, a polymer coated with a conductive metal or a conductive polymer may also be used as the substrate of the present disclosure.

Furthermore, the substrate may be in various forms, such as a film, sheet, foil, net, porous body, foam, non-woven fabric and the like.

The thickness of the substrate is not particularly limited and may range, for example, from 1 to 100 µm. In more detail, the substrate may range from 3 to 50 µm or from 4 to 30 µm, and in more detail, from 4 to 12 µm.

As described above, the negative electrode of the present disclosure includes a porous layer on the surface of the substrate, for example, on one surface or both surfaces of the substrate. The porous layer may be formed using metal powder.

The metal powder may be particles having an aspect ratio, which is the ratio of the horizontal length and the vertical length or the ratio of the major axis length and the minor axis length, exceeding 1, and may have an aspect ratio of greater than 1 and 100 or less. For example, the metal powder may be formed of a particle having an aspect ratio of greater than 1, 2 or more, 3 or more, 4 or more, 5 or more, 6 or more, or 7 or more, and 100 or less, 90 or less, 80 or less, 70 or less, 60 or less, 50 or less, 40 or less, 30 or less, 20 or less, or 10 or less.

By having a particle shape with an aspect ratio exceeding 1 and elongated in one direction, a porous layer with developed pores may be provided on the negative electrode current collector of the present disclosure. For example, by forming a porous coating layer using the metal powder particles described above, the metal powder particles may contact each other in various forms to provide pores in the porous coating layer.

The metal powder is not particularly limited, but may have a major axis length of, for example, 1 to 100 µm. The metal powder may be, for example, a rod-shaped particle. Some examples of rod-shaped metal powder particles are exemplified in FIG. 2.

The rod-shaped metal powder particle (20) has a linear outer shape, as illustrated in (a) of FIG. 2, and the cross-sectional diameter and shape of the metal powder particles may be constant.

The rod-shaped metal powder particle may have a variable cross-sectional diameter. For example, the rod-shaped metal powder particle may have a cross-sectional diameter that decreases regularly or irregularly in one direction, as illustrated in (b) of FIG. 2, and as a detailed example, the rod-shaped metal powder particle may have a needle shape, as illustrated in (c) of FIG. 2. Also the rod-shaped metal powder particle may have a cross-sectional diameter that decreases regularly or irregularly in both directions, as illustrated in (d) of FIG. 2. Alternatively, although not illustrated in the drawing, the cross-sectional diameter may increase regularly or irregularly in both directions.

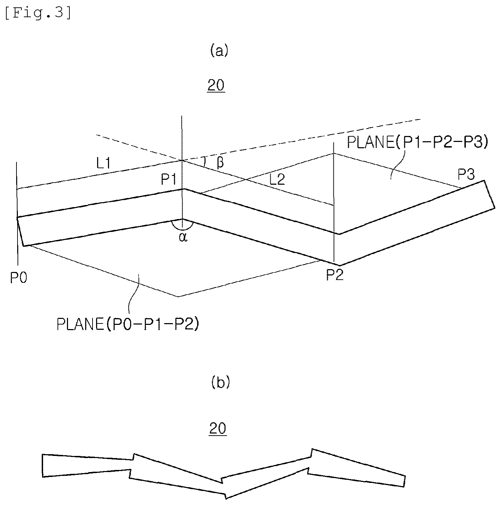

In another embodiment, the rod-shaped metal powder particle may include at least one inflection point where the direction of extension changes from one end to the other. Examples of rod-shaped metal powder particles having the above-described inflection point are exemplified in FIG. 3.

As illustrated in (a) of FIG. 3, the rod-shaped metal powder particle may have a uniform cross-sectional diameter and shape, while the direction of extension from one end to the other changes at least once, thereby forming at least one inflection point (P), and additionally, as illustrated in (b) of FIG. 3, the rod-shaped metal powder particle may have a variable cross-sectional diameter and/or shape, thereby forming at least one inflection point.

The metal powder having the inflection point will be described in more detail with reference to (a) of FIG. 3. The respective embodiments described with reference to (a) of FIG. 3 may also be applied to the metal powder in (b) of FIG. 3.

As illustrated in (a) of F 3, when one end of the rod-shaped metal powder particle is P₀ and the other end is Pₙ (where n is a natural number of 2 or more), the rod-shaped metal powder particle may include at least one inflection point (P) at which the direction of extension changes from P₀ toward Pₙ. Since the rod-shaped metal powder particle has at least one inflection point, when forming a coating layer on a substrate, more pores may be formed between the metal powder particles, the number of pores formed within the coating layer may be increased, and finer pores may be formed.

In the rod-shaped metal powder particle, when the inflection points are P₀, P₁, P₂, P₃ ... Pₙ in order, including both ends, the distance between one inflection point and the adjacent inflection points, for example, the distance (L₁) between P₀ and P₁, the distance (L₂) between P₁ and P₂, or the distance (Lₙ) between Pₙ₋₁ and Pₙ, may be the same or different.

As described above, the direction of extension of the rod-shaped metal powder particle may change from one end to the other based on an adjacent inflection point. At this time, the direction of extension may change by a predetermined angle. In detail, the direction of extension may change by 90° or an acute angle less than 90°, the angle (bending angle) formed by two straight lines including each line segment, between two adjacent line segments based on one inflection point.

For example, as illustrated in (a) of FIG. 3, a rod-shaped metal powder particle including a line segment extending from P₀ to P₁ may include a line segment extending in a direction including a line segment from P₁ to P₂ with the direction of extension changed by the bending angle at the inflection point of P₁. In this case, the bending angle formed by the line segments P₀- P₁ and P₁- P₂ may be β.

Although not illustrated in the drawing, a case in which the direction of extension changes to a curved shape may also be considered to include at least one inflection point of the present disclosure. Therefore, the rod-shaped metal powder particle of the present disclosure may be a straight-shaped rod-shaped metal powder particle or a curved rod-shaped metal powder particle.

The bending angle β included in the rod-shaped metal powder particle may be, but is not limited to, 5° or more and 90° or less, and in more detail, 5° or more, 10° or more, 15° or more, 20° or more, 25° or more, or 30° or more, and may be 90° or less, 85° or less, 80° or less, or 75° or less.

In another embodiment, in a rod-shaped metal powder particle, one virtual plane including two line segments adjacent to each other and sharing a single inflection point, and an included angle between the two line segments, and another virtual plane adjacent to the one virtual plane, may be parallel to each other or may not be parallel to each other.

For example, as illustrated in (a) of FIG. 3, in the rod-shaped metal powder particle (20), the virtual plane P₀-P₁-P₂, including the line segments P₀- P₁ and P₁-P₂, which share an inflection point P₁ and are adjacent to each other, and the included angle α between the two line segments, and the virtual plane P₁-P₂-P₃ adjacent to the virtual plane P₀-P₁-P₂, may not be parallel to each other, and although not illustrated, the two planes may be parallel to each other.

In another embodiment, the metal powder may have two or more branches. For example, the metal powder may be a branched metal powder having one main branch and at least one side branch connected to the main branch. For example, the rod-shaped metal powder particle illustrated in (a) to (d) of FIG. 2 or the rod-shaped metal powder particle having an inflection point as illustrated in (a) or (b) of FIG. 3 may be the main branch, and at least one side branch may be formed on the main branch. In this case, the side branch may also be a rod-shaped metal powder particle as described above.

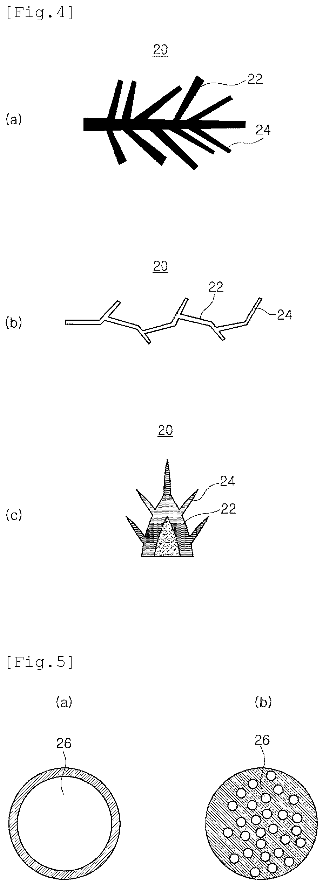

In more detail, as illustrated in (a) and (b) of FIG. 4, it may be a dendrite-shaped metal powder particle having at least one side branch (24) on one main branch (22). Additionally, as illustrated in (c) of FIG. 4, it may be a protrusion-shaped metal powder particle having at least one side branch with a smaller diameter than that of the main branch, on the main branch.

As illustrated in (a) and (b) of FIG. 5, the metal powder may have at least one through-hole (26) internally. The at least one through-hole may be formed in the main branch of the metal powder particle or may be formed in a side branch. At least one of the through-holes may be open and connected to the outside. The location of opening of the through-hole is not particularly limited and may, for example, be at the end of the main branch and/or side branch.

As illustrated in FIG. 5, the diameter of the through-hole may vary and is not particularly limited.

The metal powder may be a metal powder particle including a metal having a property on which lithium metal may be electrodeposited on a surface. The metal included in the metal powder is not particularly limited.

In an embodiment, the metal powder may include a metal, an oxide of the metal, or an alloy of the metal, and the metal may be a lithiophilic metal or a non-lithiophilic metal. The lithiophilic metal may be at least one metal among lithiophilic metals such as Si, Zn, Ti, Au, Ag, Pt, Mg, Sn, In, and Bi, and the non-lithiophilic metal may be at least one selected from the group consisting of Cu, Ge, Al, Pb, Sb, Ni, Mn, Fe, Co, Cr, W, and Ru. By forming a porous layer using metal powder containing the metal, metal oxide, or metal alloy as described above, uniform lithium electrodeposition may be induced within the porous layer, the formation and growth of lithium dendrites may be suppressed, and further, the lithium electrodeposition density may be increased, contributing to extended lifespan characteristics of the negative electrode.

The metal powder may further include a carbon material or polymer. For example, the metal powder may be formed by mixing the above-described metal, metal oxide, or metal alloy; and the carbon material or polymer.

Carbon materials that may be included in the metal powder may be natural graphite, artificial graphite, hard carbon, soft carbon, carbon black, carbon nanotubes, Ketjen black, acetylene black, fullerene, carbon fiber, fluorocarbon, carbon nitride, or the like. The carbon nitride may be at least one type of carbon material selected from the group consisting of, for example, graphitic carbon nitride, phosphorus-doped graphitic carbon nitride, and boron-doped graphitic carbon nitride.

In addition, the polymer may be a conductive polymer, and in detail, at least one type of conductive polymer selected from the group consisting of poly(3,4-ethylenedioxythiophene):poly(styrenesulfonate) (PEDOT:PSS), poly aniline (PANI), poly pyrrole (PPy), polythiophene (PT), polyacetylene (PA), and polyp-phenylene vinylene (PPV).

Furthermore, the metal powder may include, but is not limited to, at least one selected from the group consisting of polyimide (PI), polyethylene (PE), polypropylene (PP), polyethylene terephthalate (PET), and polyetherimide (PEI).

The metal powder included in the porous layer on the negative electrode current collector may be manufactured into a predetermined shape through a spontaneous substitution reaction. In detail, the metal powder may be manufactured using a spontaneous substitution reaction process utilizing the difference in reducing power of the metal and a reaction activation process induced by hydrogen bubbles generated in an electrolyte containing chloride ions or the like, and this method allows for the production of metal powder with a high specific surface area in a short period of time through a simple process.

The spontaneous substitution reaction is well-established theoretically, and the conditions for performing the spontaneous substitution reaction may be easily selected, which will not be described in detail here. For example, the reaction rate of the spontaneous substitution reaction may be controlled by adjusting the concentration of metal ions in the electrolyte.

In detail, a negative electrode including a coating layer on the surface of a substrate, which may be a negative electrode current collector, may be provided by using multiple metal powder particles. The porous layer formed on the surface of the substrate by the metal powder particles may be a porous layer with developed pores, containing a large number of pores, due to the high surface area of the metal powder particles.

During the charging process of a battery including the porous layer provided above, the negative electrode may provide sufficient space for lithium deposition, and the negative electrode according to an embodiment of the present disclosure may suppress volumetric expansion of the battery. According to another embodiment, the negative electrode including the porous layer has developed pores, allowing for uniform deposition of lithium metal and suppressing the formation and growth of lithium dendrites in a rechargeable/dischargeable battery. In addition, it may contribute to extending the lifespan of the negative electrode by increasing the electrodeposition density of lithium.

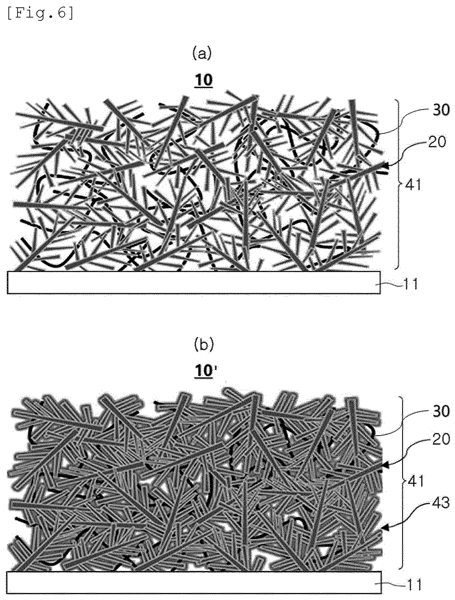

An example of a porous layer formed by the metal powder in the present disclosure is schematically illustrated in (a) of FIG. 6. (a) of FIG. 6 schematically illustrates a cross-section of a negative electrode (10) including a porous layer (41) formed using the dendrite-shaped metal powder illustrated in (a) of FIG. 4. As illustrated in (a) of FIG. 6, the metal powder particles are arranged in a disordered manner, allowing the formation of a porous layer with developed pores. The pores within the porous layer may be interconnected to form a three-dimensional pore network.

As a porous layer with the three-dimensional pore network as described above on the substrate surface, lithium ions moving from the positive electrode during the charging process may migrate through the pores of the porous layer into the coating layer, allowing lithium metal to be electrodeposited within the pores.

(b) of FIG. 6 is a conceptual diagram of a charged negative electrode (10') including a porous layer (43) in a charged state, with lithium metal (13) electrodeposited within the pores of the porous layer of (a) of FIG. 6, by charging.

The porous layer formed by the metal powder as described above contains a large number of pores, providing a storage space for storing lithium metal and thereby preventing uneven electrodeposition of lithium during the charging process and enhancing electrochemical characteristics by increasing the contact surface area between lithium and the negative electrode current collector. In addition, since lithium is electrodepositioned within the porous layer, volume changes in the negative electrode due to lithium electrodeposition and desorption may be prevented, thereby maintaining the performance of the negative electrode and battery stability.

The porous layer according to the present disclosure may be a single layer or two or more multilayers. For example, as illustrated in (a) of FIG. 6, a single layer may be formed using metal powder. In addition, a multilayer may be formed using two or more types of metal powder particles having different particle shapes or sizes. For example, the porous layer may include a first layer positioned on the surface side of a substrate serving as a negative electrode current collector and a second layer positioned on the outer surface side of the porous layer, and the metal powder included in the first layer may have a smaller particle size than the metal powder located in the second layer. The porous layer may include a first coating layer having a small pore size using a first metal powder having a small particle size, on the current collector side, and a second coating layer having a larger pore size using a second metal powder having a larger particle size than the first metal powder, on the first coating layer.

The metal powder in the first layer located on the negative electrode current collector side has a smaller particle size, thereby forming smaller pores and thus increasing the uniformity of lithium electrodeposition within the porous layer, thereby enhancing electrodeposition efficiency and suppressing dendrite growth.

Although not limited thereto, in the porous layer, the thickness of the first layer may be thicker than the thickness of the second layer.

The particle size of the metal powder may be determined by setting the outer boundary defined by the main branch and side branch of a single metal powder particle, as the particle boundary, and determining the particle size based on volume.

The porous layer may include a binder along with the metal powder. For example, the porous layer as above may be manufactured by forming a paste of a metal powder having a high surface area onto the surface of a substrate serving as a negative electrode current collector, mixing the paste with a binder and a solvent, casting the paste onto the surface of the substrate, and drying the paste.

The binder included in the above paste manufacturing is not particularly limited, and a binder commonly used in electrode manufacturing may also be appropriately used in the present disclosure. For example, the binder may include at least one selected from the group consisting of styrene-butadiene rubber, acrylated styrene-butadiene rubber, acrylonitrile-butadiene rubber, polybutadiene rubber (BR), acrylic rubber, butyl rubber, ethylene-propylene copolymer, polyepichlorohydrin, polyphosphazene, polyacrylonitrile, polystyrene, polyvinylpyridine, chlorosulfonated polyethylene, latex, polyester resin, acrylic resin, phenol resin, epoxy resin, polyvinyl alcohol resin, acrylate resin, polyaniline (PANI), polythiophene (PT), polyacetylene, polypyrrole (PPy), poly(3,4-ethylene dioxythiophene) (PEDOT), polyvinylidene fluoride (PVdF), Poly(vinylidene fluoride-co-hexafluoropropylene), carboxymethylcellulose (CMC), starch, hydroxypropylcellulose, polyvinylpyrrolidone, polytetrafluoroethylene (PTFE), polytetrafluoroethylene, polyethylene, polypropylene, ethylene-propylene-diene monomer (EPDM), polymethylmethacrylate, and fluororubber.

In an embodiment, the binder may be a styrene-butadiene rubber (SBR)-based binder, a carboxymethyl cellulose (CMC)-based binder, a polyacrylic acid-based binder, a poly(3,4-ethylenedioxythiophene, PEDOT)-based binder, or a fluorine-containing binder. In more detail, the binder may be a fluorine-containing binder, and for example, the fluorine-containing binder may be at least one selected from the group consisting of polyvinylidene fluoride (PVdF), polytetrafluoroethylene (PTFE), polytetrafluoroethylene, and fluororubber.

The binder is not particularly limited, but may be included in an amount of 1 to 30 wt% based on the solid content of the paste. If the binder content is less than 1 wt%, the adhesion of the porous layer may be reduced, and if exceeding 30 wt%, resistance may increase, resulting in a decrease in electrical conductivity and further deteriorating lithium deposition performance. In more detail, the binder content may be 1 wt% or more, 1.2 wt% or more, 1.5 wt% or more, 2 wt% or more, or 3 wt% or more, and may be 30 wt% or less, 25 wt% or less, 20 wt% or less, 15 wt% or less, or 12 wt% or less.

Meanwhile, the solvent is not particularly limited, and a solvent commonly used in electrode manufacturing may be suitably used in the present disclosure, and for example, may include at least one selected from the group consisting of water, acetone, formic acid, chloroform, isopropanol, N-methylpyrrolidone (NMP), Dimethylformamide (MF), dimethylacetamide (DMAc), dimethyl sulfoxide (DMSO), and Tetrahydrofuran (THF).

The solvent is not particularly limited, but may be included in the paste in a content of 30 to 60 wt%.

A method for applying the paste according to the present disclosure to the substrate surface is not particularly limited. A method such as bar coating, casting, spraying, doctor blading or the like, in detail, a wet coating method, may be used. The thickness of the porous layer may be easily controlled, for example, by adjusting the viscosity of the paste, the height of the doctor blade or the like.

In this case, the thickness of the porous layer may range, but is not limited thereto, from 0.5 to 100 µm. The porous layer functions to store lithium metal, and may thus be formed with a thickness that allows for the minimum storage of lithium metal. In this regard, the porous layer may be 0.5 µm or more, 1 µm or more, 1.5 µm or more, 2 µm or more, 3 µm or more, or 5 µm or more.

Meanwhile, if the porous layer is excessively thick, the transfer of lithium ions may not be smooth, which may reduce the effects obtained by including the porous layer or make it difficult to secure the effects. In another aspect, if the porous layer is excessively thick, it may result in a loss of energy density per volume and weight. In this regard, the porous layer of the present disclosure may be 100µm or less, or may be 90µm or less, 80µm or less, 70µm or less, 60um or less, or 50µm or less.

The porous layer obtained by the present disclosure may have a porosity of 30% or more and 95% or less, as determined by XRM (X-ray Microscope) analysis before lithium metal electrodeposition or upon complete discharge. In detail, the porous layer may have a porosity of 50% or more, 70% or more, 80% or more, or 85% or more. Additionally, the porous layer according to the present disclosure may implement the high porosity described above by interconnecting pores to form a porous layer.

The porous layer may have a closed porosity, which indicates the proportion of pores that are not interconnected, of 0.05% or less, 0.03% or less, 0.01% or less, or 0.0095% or less, before lithium metal electrodeposition or upon complete discharge. In detail, the negative electrode according to the present disclosure has highly developed porosity, with interconnected pores forming a three-dimensional pore network, thereby improving lithium ion insertion and de-insertion characteristics during charging and discharging.

In addition, the porous layer according to the present disclosure may have a high specific surface area of 300 m²/m³ or more, before the lithium metal electrodeposition or upon complete discharge.

Meanwhile, the porous layer according to the present disclosure may include pores of various sizes, as the pores are formed by metal powder particles with a high surface area. For example, the porous layer according to the present disclosure may include pores ranging from nano-sized to meso-sized.

As described above, the porous layer formed on the negative electrode current collector may include pores of various sizes, and thus lithium metal may be electrodeposited within the pores of the porous layer.

The negative electrode provided by the present disclosure includes a porous layer on the surface of a substrate serving as the negative electrode current collector, and lithium is electrodeposited within the pores of the porous layer, thereby improving electrodeposition density and extending battery lifespan.

In addition, the stable electrodeposition of lithium within the pores suppresses lithium dendrite formation, the contact area between the lithium metal and the current collector is improved, and the local current density of the negative electrode due to a high specific surface area thereof is reduced, thereby providing uniform electron distribution within the lithium electrode. Thus lithium dendrite formation and growth may be prevented during charge/discharge, thereby enhancing battery stability.

Furthermore, when using the current collector according to the present disclosure, sufficient space for lithium deposition during charge/discharge may be provided, thereby suppressing volumetric expansion of the battery.

### Mode for the Invention

Hereinafter, the present disclosure will be described in more detail with examples. However, the following examples are merely examples of the present disclosure and are not intended to limit the present disclosure.

### Preparation of Metal Powder

### Preparation Example 1

1.0 M sodium chloride and 0.2 M hydrogen chloride were added as reaction accelerators into the room-temperature electrolyte in which copper sulfate (CuSO₄) (concentration: 0.1 M) was dissociated.

An aluminum plate (10 cm x 8 cm), which has a higher reducing power than that of the copper sulfate, was added to the electrolyte at room temperature and reacted for 20 minutes while generating hydrogen bubbles within the electrolyte.

Copper powder was produced through a spontaneous substitution reaction of copper due to the difference in reducing power between the aluminum plate and the copper in the electrolyte.

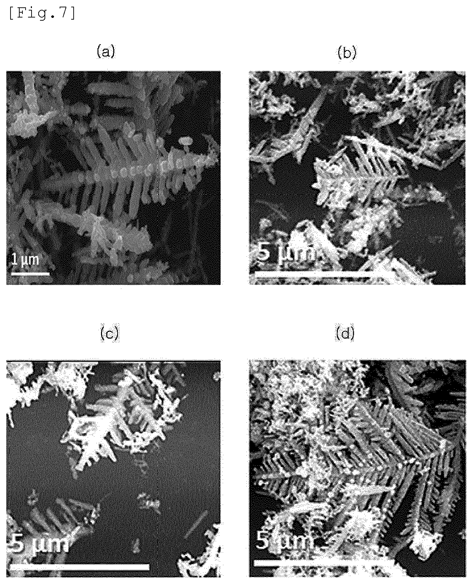

The produced copper powder was imaged and is illustrated in (a) of FIG. 7. In addition, the size of the metal powder was measured using a Field Emission Scanning Electron Microscope (FESEM), and the results are illustrated in Table 1 below.

### Preparation Example 2

Copper powder was prepared using the same method as in Example 1, except that the reaction to generate copper powder in the electrolyte was performed for 30 minutes, instead of 20 minutes in Example 1.

The prepared copper powder was imaged and is illustrated in (b) of FIG. 7. In addition, the size of the metal powder was measured using a FESEM, and the results are illustrated in Table 1 below.

### Preparation Example 3

Copper powder was prepared using the same method as in Example 1, except that the reaction to generate copper powder in the electrolyte was performed for 40 minutes, instead of 20 minutes in Example 1.

The prepared copper powder was imaged and is illustrated in (c) of FIG. 7. In addition, the size of the metal powder was measured using FESEM, and the results are illustrated in Table 1 below.

### Preparation Example 4

Copper powder was prepared using the same method as in Example 1, except that the reaction to generate copper powder in the electrolyte was performed for 60 minutes, instead of 30 minutes in Example 1.

The prepared copper powder was imaged and is illustrated in (d) of FIG. 7. In addition, the size of the metal powder was measured using FESEM, and the results are illustrated in Table 1 below.

**[Table 1]**

| | Preparation Example 1 | Preparation Example 2 | Preparation Example 3 | Preparation Example 4 |
|---|---|---|---|---|
| Metal Powder Size (µm) | 3.0 | 5.0 | 7.0 | 9.0 |

### Example 1

90 wt% of the dendritic copper metal powder obtained in Preparation Example 1 and 10 wt% of PVDF binder were added to NMP solvent to prepare a paste. At this time, the solids and solvent were added at a weight ratio of 60:40. The prepared paste was cast onto one surface of a copper current collector (4 µm thick) using a doctor blade method and dried to form a 48 µm-thick porous layer, thereby producing a negative electrode.

The porosity and closed pore ratio of the porous layer of the obtained negative electrode were measured by MIP (Mercury Intrusion Porosimetry) analysis and XRM analysis (X-ray microscope), and the results are illustrated in Table 2.

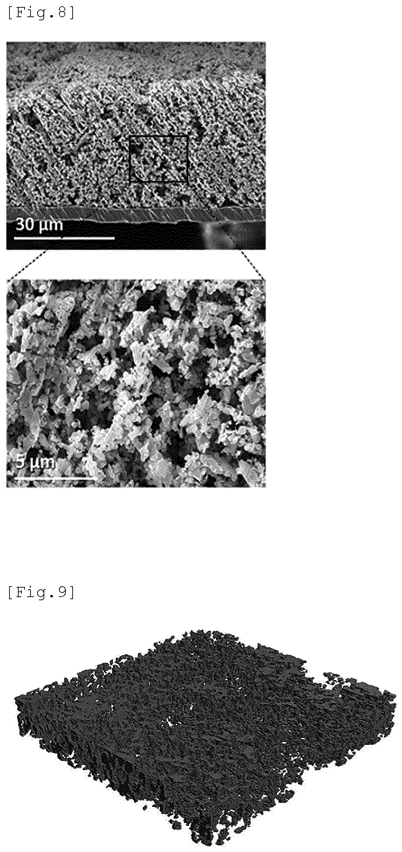

A cross-section of the prepared negative electrode was imaged, and the photograph is illustrated in (a) of FIG. 8. In addition, a portion of the image is enlarged and illustrated in (b) of FIG. 8.

Furthermore, the pore distribution of the obtained porous layer was imaged in 3D, and this is illustrated in FIG. 9. In detail, as a device including an X-ray source for the negative electrode on which the porous layer was formed, a detector, and a lens capable of magnifying the source between the detectors, an X-ray microscope of Zeiss's Xraida 520 Versa was used to obtain a 3D stereoscopic structure of the pores, and a 3D image of the internal pore structure of the negative electrode mixture layer was obtained by 3D rendering from the image of the obtained 3D stereoscopic structure using software GEODICT. This is illustrated in FIG. 9.

### Examples 2 to 4

Negative electrodes were manufactured using the same method as in Example 1, except that the metal powder particles obtained in Preparation Examples 2 to 4 were used.

Also the pore characteristics of the porous layers of the negative electrodes obtained in respective examples were analyzed, and the results are illustrated in Table 2.

**[Table 2]**

| | Example 1 | Example 2 | Example 3 | Example 4 |
|---|---|---|---|---|
| Porosity (%) | 95% | 85% | 86% | 91% |
| Closed Pore Ratio (%) | 0.006 | 0.0093 | 0.0081 | 0.0075 |

As can be seen from Table 2, it can be seen that the negative electrodes manufactured in respective examples exhibited highly developed porosity with a porosity of 85% or more, and a closed porosity ratio of less than 0.01%, indicating that the pores were open and interconnected, forming a three-dimensional pore network. As can be seen in (a) of FIG. 8 and (b) of FIG. 8 that is an enlarged portion thereof, provided by imaging a cross-section of the negative electrode with the porous layer of Example 1, dendrite-shaped metal powder particles aggregated to form a porous layer on the surface of the copper current collector, and furthermore, the porous layer visually demonstrated the development of pores between the metal powder particles. Furthermore, from FIG. 9, which depicts an image of the internal pore structure of the porous layer, it was confirmed that the porous layer obtained in Example 1 as above had developed internal pores that were interconnected to form a three-dimensional pore network.

### Comparative Example 1

The copper current collector used to form the coating layer in Example 1 was used as a negative electrode current collector without forming a separate coating layer.

### Comparative Example 2

A paste containing carbon powder (particle size: 40 nm, specific surface area: 62 m²/g, powder density: 0.16 g/cm³, trade name: Supe-P Li by Timcal) was cast onto the same copper current collector as in Example 1 to produce a negative electrode with a carbon coating layer.

The process was performed in the same manner as in Example 1, except that the paste was prepared using carbon powder, instead of the dendritic metal powder in Example 1.

Thus the porosity of the coating layer formed on the copper current collector was measured and found to be less than 30%.

### Comparative Example 3

A negative electrode with a 100 nm thick, non-porous silver coating layer was produced by coating silver onto the same copper current collector as in Example 1, by sputter coating silver.

### [Battery Manufacturing and Battery Characteristics Evaluation]

### - Negative Electrodes of Example 1 and Comparative Examples 1 to 3 -

Coin-type full-cell batteries were fabricated using the negative electrodes manufactured in Example 1 and Comparative Examples 1 to 3, each containing the positive electrode in which NCM 622 (3 mAh/cm²) as the positive electrode active material, and a carbonate-based electrolyte (N/P ratio = 2.3).

First, the batteries using the negative electrodes manufactured in Example 1, and Comparative Examples 1 and 2, were charged, and the charged negative electrodes were disassembled and the cross-sections thereof were observed.

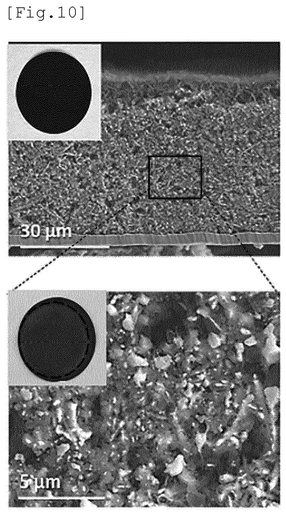

A cross-section of the charged negative electrode manufactured in Example 1 is illustrated in (a) of FIG. 10, and a magnified portion of the image is illustrated in (b) thereof.

As can be seen from (a) and (b) of FIG. 10, lithium was electrodeposited within the pores of the porous layer formed on the surface of the negative electrode current collector. Even with this type of charging, the negative electrode was found to have lithium ions electrodeposited within the pores of the porous coating layer, and no change in the thickness of the negative electrode occurred as compared to (a) of FIG. 8, and it could be confirmed that the volumetric expansion of the negative electrode due to charging and discharging was suppressed.

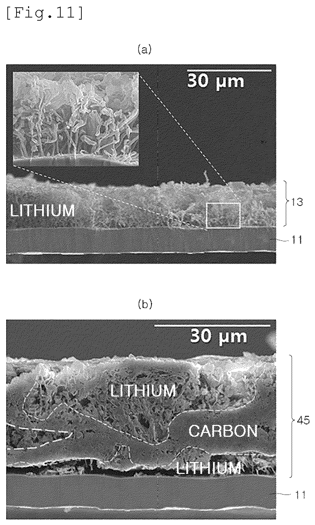

Meanwhile, a cross-section of the negative electrode using the flat copper current collector manufactured in Comparative Example 1 was imaged and is illustrated in (a) of FIG. 11. As can be seen from (a) of FIG. 11, lithium metal was electrodepositioned on the surface of the copper current collector (11), forming a lithium metal layer (13). The formation of this lithium metal layer causes the negative electrode to expand in volume, potentially leading to battery volumetric expansion issues during charging and discharging.

In addition, a cross-section of the negative electrode with a carbon coating layer on the flat copper current collector manufactured in Comparative Example 2 was imaged and is illustrated in (b) of FIG. 11. As can be seen from (b) of FIG. 11, it was found that a lithium layer was formed by electrodeposition of lithium metal on the surface of the carbon coating layer (45) formed on the copper current collector (11). Depending on the surface shape of the carbon coating layer, the problem of volumetric expansion due to electrodeposition of lithium was reduced compared to the negative electrode of Comparative Example 1, but the problem of volumetric expansion of the battery due to charging and discharging still existed because lithium electrodeposition existed on the surface of carbon located on the outermost surface of the negative electrode.

Although the negative electrode of Comparative Example 3 was not shown separately, it was found that the negative electrode of Comparative Example 3 also had the same planar surface as in Comparative Example 1 and could provide a result of improving the lithium electrodeposition density by having a silver coating layer, but there was a problem of volumetric expansion of the negative electrode during the charge and discharge process.

Although the negative electrode of Comparative Example 3 was not shown separately, it was found that the negative electrode of Comparative Example 3 also had the same planar surface as in Comparative Example 1 and could provide a result of improving the lithium electrodeposition density by having a silver coating layer, but there was a problem of volumetric expansion of the negative electrode during the charge and discharge process.

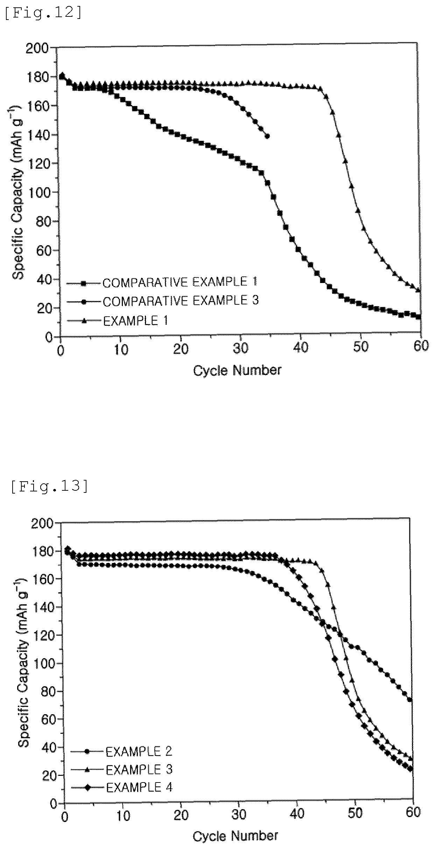

Meanwhile, the batteries using the negative electrodes of Example 1, and Comparative Examples 1 and 3, were charged and discharged under the conditions of 0.2C charging and 0.3C discharging, to evaluate the lifespan characteristics thereof. The evaluation results are illustrated in FIG. 12.

As can be seen from FIG. 12, the battery containing the negative electrode according to Example 1 maintained a constant capacity with little change up to approximately 45 cycles of operation. However, Battery 2 containing the negative electrode of Comparative Example 1 exhibited a gradual capacity decrease before reaching 10 cycles, and Battery 3 containing the negative electrode of Comparative Example 3 exhibited a capacity decrease starting from approximately 25 cycles.

### - Negative Electrodes of Examples 2 to 4 -

Batteries were manufactured using the same method as that of Battery 1 using the negative electrode of Example 1, except that the negative electrodes manufactured in Examples 2 to 4 were respectively used.

The manufactured batteries were respectively charged and discharged under the conditions of 0.2C charging and 0.3C dis charging, to evaluate lifespan characteristics thereof. The evaluation results are illustrated in FIG. 13.

As can be seen from FIG. 13, all of the respective batteries including the negative electrodes of Examples 2 to 4 maintained a constant capacity with almost no change until approximately 30 cycles of operation, and the battery including the negative electrode of Example 4 showed excellent results in which the capacity was maintained constant without change until 45 cycles.

### DESCRIPTION OF REFERENCE CHARACTERS

10: NEGATIVE ELECTRODE
10': CHARGED NEGATIVE ELECTRODE
11: NEGATIVE ELECTRODE CURRENT COLLECTOR
13: LITHIUM METAL
20: METAL POWDER
22: MAIN BRANCH
24: SIDE BRANCH
26: THROUGH-HOLE
30: BINDER
41: POROUS LAYER
43: CHARGED POROUS LAYER
P, P0, P1, P2, P3, Pn: INFLECTION POINT
α: INCLUDED ANGLE
β: BENDING ANGLE

## Claims

1. A negative electrode for a lithium metal battery, comprising:
a substrate and a porous layer on the substrate,
wherein the porous layer has a porosity of 30% or more determined by XRM analysis before lithium metal electrodeposition or upon complete discharge.

2. The negative electrode for a lithium metal battery of claim 1, wherein the porous layer has a porosity of 30% or more and 95% or less determined by XRM analysis before the lithium metal electrodeposition or upon the complete discharge.

3. The negative electrode for a lithium metal battery of claim 1, wherein the porous layer has a closed porosity of 0.05% or less determined by XRM analysis before the lithium metal electrodeposition or upon the complete discharge.

4. The negative electrode for a lithium metal battery of claim 1, wherein the porous layer has a thickness of 0.5 to 100 µm.

5. The negative electrode for a lithium metal battery of claim 1, wherein the metal powder includes at least one metal selected from the group consisting of Si, Zn, Ti, Au, Ag, Pt, Mg, Sn, In, Bi, Cu, Ge, Al, Pb, Sb, Ni, Mn, Fe, Co, Cr, W and Ru, an oxide of the metal, or an alloy of the metal.

6. The negative electrode for a lithium metal battery of claim 1, wherein the porous layer further includes at least one type of carbon material selected from the group consisting of graphitic carbon nitride, phosphorus-doped graphitic carbon nitride, and boron-doped graphitic carbon nitride.

7. The negative electrode for a lithium metal battery of claim 1, wherein the porous layer further includes at least one conductive polymer selected from the group consisting of poly(3,4-ethylenedioxythiophene):poly(styrenesulfonate) (PEDOT:PSS), polyaniline (PANI), polypyrrole (PPy), polythiophene (PT), polyacetylene (PA), and polyp-phenylene vinylene (PPV).

8. The negative electrode for a lithium metal battery of claim 1, wherein the porous layer further includes a binder.

9. The negative electrode for a lithium metal battery of claim 8, wherein the binder is a fluorine-containing binder.

10. The negative electrode for a lithium metal battery of claim 8, wherein the binder includes at least one selected from the group consisting of polyvinylidene fluoride (PVdF), polytetrafluoroethylene (PTFE), polytetrafluoroethylene, and fluororubber.

11. The negative electrode for a lithium metal battery of claim 1, wherein the metal powder is a particle having an aspect ratio greater than 1.

12. The negative electrode for a lithium metal battery of claim 1, wherein the metal powder has a major axis length of 1 to 100 µm.

13. The negative electrode for a lithium metal battery of claim 1, wherein the metal powder is a rod-shaped particle.

14. The negative electrode for a lithium metal battery of claim 1, wherein the metal powder is a rod-shaped particle having at least one inflection point where a direction of extension changes from one end to the other end.

15. The negative electrode for a lithium metal battery of claim 14, wherein a bending angle β, which changes in the direction of extension at the inflection point, is 5° or more and 90° or less.

16. The negative electrode for a lithium metal battery of claim 1, wherein the metal powder has two or more branches.

17. The negative electrode for a lithium metal battery of claim 1, wherein the metal powder has a main branch and at least one side branch connected to the main branch.

18. The negative electrode for a lithium metal battery of claim 1, wherein the porous layer includes a first layer on a substrate surface side and a second layer that is an outer surface side of the porous layer,
wherein a metal powder in the first layer has a smaller particle size than a metal powder in the second layer.

19. The negative electrode for a lithium metal battery of claim 1, wherein lithium metal is electrodeposited within pores of the porous layer.

20. The negative electrode for a lithium metal battery of claim 1, wherein the substrate is a current collector.
